# EUROPÄISCHE PATENTSCHRIFT

(11) **EP 1 324 093 B1**
(45) Veröffentlichungstag und Bekanntmachung des Hinweises auf die Patenterteilung: **27.07.2005**
(21) Anmeldenummer: 02026832.2
(22) Anmeldetag: 29.11.2002
(51) Int. Cl.: G02B 7/00, H01L 21/00

(54) **Einrichtung zur Aufbewahrung und zum Transport von optischen Bauelementen**
Device for storing and transporting optical elements
Dispositif pour l'entreposage et le transport des éléments optiques

(30) Priorität: 18.12.2001 DE 10164529
(43) Veröffentlichungstag der Anmeldung: 02.07.2003
(73) Patentinhaber: JENOPTIK Laser, Optik, Systeme GmbH, 07745 Jena (DE)
(72) Erfinder: Dressler, Thomas, 07749 Jena (DE)
(74) Vertreter: Bertram, Helmut, Dipl.-Phys.

(56) Entgegenhaltungen:
- EP-A- 0 735 573
- WO-A-00/02228
- US-A- 5 984 610

## Beschreibung

Die Erfindung betrifft eine Einrichtung zur Aufbewahrung und zum Transport von mindestens einem optischen Bauelement, das zum Schutz vor Umwelteinflüssen in einem Behälter mit einer gasdicht schließenden Behältertür untergebracht ist.

Bekanntermaßen werden bei der optischen Lithographie Chipstrukturen mit Hilfe einer Maske und mit Licht auf einen Wafer übertragen. Während spezielle Laser die für eine hohe Auflösung notwendigen Wellenlängen erzeugen, dienen hochauflösende Projektionsobjektive zur Abbildung der Strukturen, wobei den darin enthaltenen höchstauflösenden Linsen eine zunehmende Bedeutung aufgrund immer kleiner werdender Chipstrukturen zukommt.

Für die entsprechenden Projektionsobjektive sind Linsen aus optischen Gläsern oder Quarzgläsern vor allem aufgrund ihrer geringen Beständigkeit gegenüber der kurzwelligen Laserstrahlung ungeeignet. Besser verwendbar sind Linsen aus hochwertigem Kalziumfluorid, das allerdings sehr anfällig gegenüber Kontaminationen, insbesondere Wasser ist. So können bereits Monowasserlagen, die nur schwer von den fluoridischen Oberflächen zu entfernen sind, hohe Absorptionsverluste bei Laserwellenlängen unterhalb von 193 nm und insbesondere bei 157 nm zur Folge haben.
Aus diesem Grund sind die optischen Bauelemente in Waferstappern von einer Reinstraumatmosphäre umgeben, indem der Betrieb entweder gasgespült oder unter Vakuumbedingungen erfolgt.

Das Problem, die Oberflächen der optischen Elemente nach ihrer Herstellung so lange vor Verunreinigungen zu schützen, bis deren Inbetriebnahme im optischen Projektionsstrahlengang erfolgt, ist bisher nicht zufriedenstellend gelöst, insbesondere wenn verschließbare Behälter zur Aufbewahrung verwendet werden.

Besonders problematisch ist die Sauberhaltung, wenn die Elemente zunächst gelagert und anschließend in den Projektionsstrahlengang der Halbleiterfertigungsanlage bei Gewährleistung einer sofortigen Arbeitsfähigkeit überführt werden sollen.

Aufgabe der Erfindung ist es deshalb, dieses Problem zu lösen, insbesondere die optischen Elemente nicht nur bei der Lagerung und beim Transport, sondern auch beim funktionsfähigen Einbau in den optischen Projektionsstrahlengang vor Verunreinigungen zu schützen.

Diese Aufgabe wird durch die Einrichtung nach Anspruch 1 gelöst.

Die Behältertür ist mit Mitnehmern für einen Verschluss einer Be- und Entladeöffnung einer den Reinstraum umschließenden Kammer ausgestattet, die während der Montage und beim Öffnen des Behälters in den Verschluss eingreifen, so dass ein senkrecht zur Richtung der Manipulation erfolgendes Aufziehen der Behältertür, bei dem der Verschluss mitgenommen wird, die Schleusenöffnung freigibt.

Weiterhin besteht die Behältertür aus zwei gegeneinander verschiebbaren Teilen, von denen ein erster Teil die Mitnehmer enthält und ein zweiter, feststellbarer Teil zum Verschluss des Behälters dient. Beide Teile besitzen voneinander verschiedene Öffnungshübe und sind in einer Richtung senkrecht zur Manipulation des Trägers in unterschiedliche Stellungen verschiebbar.
In einer ersten Stellung öffnet das erste Teil die Be- und Entladeöffnung durch die Mitnahme des Verschlusses zum Ausströmen von Schutzgas aus der Kammer für eine Teilereinigung, währenddessen der zweite Teil im festgestellten Zustand den Behälter verschließt. In mindestens einer weiteren Stellung erfolgt dann die Freigabe der Schleusenöffnung.
Besonders vorteilhaft sind die beiden Teile der Behältertür in einer zweiten Stellung, bei der die Feststellung des zweiten Teils aufgehoben ist, zunächst in eine gemeinsame Verschiebeposition gebracht, bei der die Be- und Entladeöffnung vollständig und der Behälter teilweise geöffnet sind. Abschließend nimmt dann der zweite Teil durch seinen gegenüber dem ersten Teil größeren Öffnungshub in einer dritten Stellung eine weitere Verschiebeposition ein, bei der auch der Behälter vollständig geöffnet ist. Im zweiten Teil kann ein halbautomatischer Sicherheitsmechanismus eingebaut sein, der senkrecht zur Verschiebeposition wirkt und den ersten und zweiten Teil mechanisch gegenüber dem Behälter verriegelt.

Besonders vorteilhaft ist es, wenn der Behälter zur Vermeidung von Druckverlusten innerhalb der Kammer mit einer Blende zur Begrenzung eines Spaltes versehen ist, dessen Entstehung beim Öffnen des Behälters durch eine keilförmige Ausbildung des zweiten Teils begründet ist.

Der Manipulator sollte zum sicheren und schnellen Überführen des Trägers mit jedem der darauf justiert befestigten optischen Bauelemente in dem Behälter enthalten sein und eine Schnittstelle zur Befestigung eines verlängernden Manipulatorarms für weite Transportwege aufweisen. Bei der Manipulation ist der Träger in verschiedenen, in unterschiedlichen Ebenen liegenden Raststellungen fixierbar und nur in diesen Raststellungen vom Manipulator zu trennen.

Mit der Erfindung wird ein optisches Bauelement unter Beibehaltung eines definierten Justierzustandes, den es in einer schützenden Umgebung aufweist, in eine zu beschickende Anlage überführt, um so innerhalb der Anlage seiner Abbildungsfunktion ohne zusätzliche Ausrichtungen gerecht zu werden. Es besteht ein gleichbleibender Schutz der Bauelemente vor Kontaminationen sowohl während der Lagerung als auch und beim Handling aus dem Behälter heraus in einen reinen Umgebungsraum. Das Handlingrisiko für CaF₂-Bauelemente wird minimiert.

Da der Behälter auch zur Entnahme der optischen Elemente aus der Anlage geeignet ist, können die kostenintensiven optischen Elemente auf diese Weise einem Wiederaufbereitungsprozess zugeführt werden. Die durch Laserstrahlung belasteten optischen Oberflächen können in einem solchen Prozess nachpoliert und neu beschichtet werden. Die derart behandelten optischen Elemente werden zum Schutz vor Umwelteinflüssen dann im vorjustierten Zustand wieder in den Behälter gebracht, um im Bedarfsfall für den Einsatz in einem der Strahlengänge einer in Betracht kommenden Anlage zur Verfügung zu stehen.

Ein weiterer Vorteil besteht in einem schnellen und leicht handhabbaren Austausch der vorjustierten Bauelemente unter Vermeidung eines Systemstops. Der Behälter kann mit der betreffenden Anlage einfach verbunden werden.

Die Erfindung soll nachstehend anhand der schematischen Zeichnung näher erläutert werden. Es zeigen:
- Fig. 1: eine Seitenansicht eines geschlossenen Transportbehälters
- Fig. 2: der geschlossene Transportbehälter in einer perspektivischen Darstellung
- Fig. 3: eine als Interface für den Transportbehälter dienende Aufnahmeplatte
- Fig. 4: die Schnittstelle zum Befestigen des verlängernden Manipulatorarms
- Fig. 5: einen Entriegelungsmechanismus für den Manipulator
- Fig. 6: den teilweise geöffneten Transportbehälter in einer perspektivischen Darstellung von der Seite
- Fig. 7: den wie in Fig. 6 teilweise geöffneten Transportbehälter in einer perspektivischen Darstellung von unten
- Fig. 8: den vollständig geöffneten Transportbehälter in einer perspektivischen Darstellung von der Seite
- Fig. 9: den wie in Fig. 8 vollständig geöffneten Transportbehälter in einer perspektivischen Darstellung von unten
- Fig. 10: einen Schnitt durch den vollständig geöffneten Transportbehälter mit gleichzeitig geöffnetem Verschluss für eine Be- und Entladeöffnung einer Reinstraumkammer
- Fig. 11: den vollständig geöffneten Transportbehälter mit herausgefahrenem Optikträger

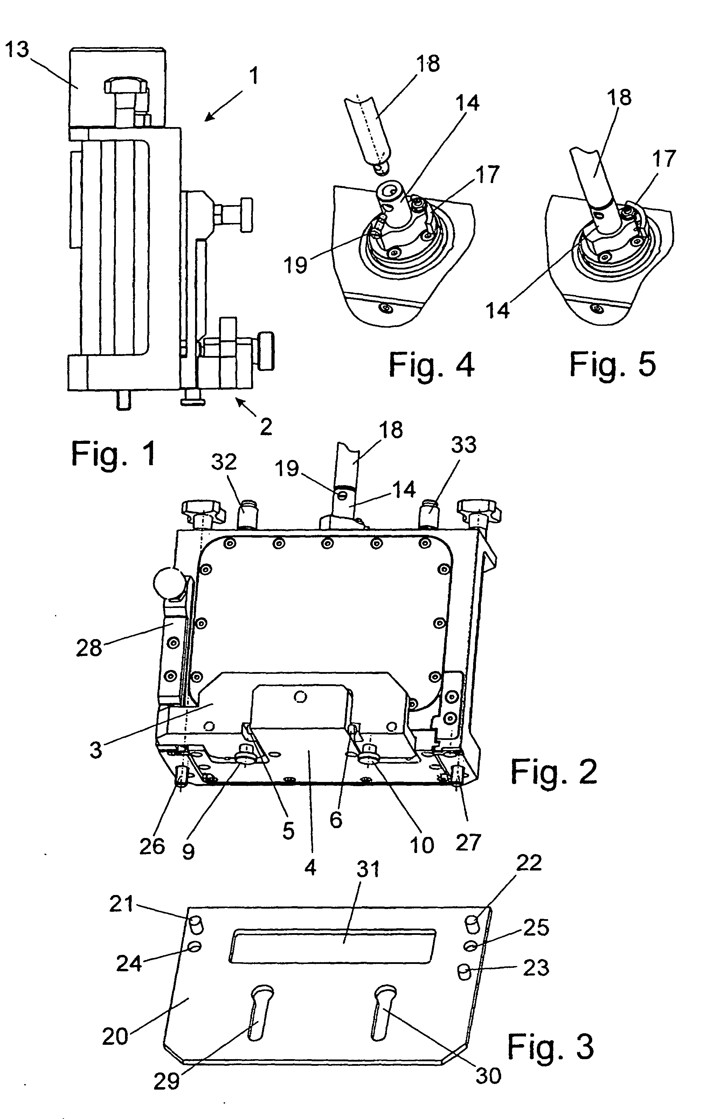

Ein in den Figuren 1 und 2 sowie 6 bis 11 dargestellter Behälter 1, der zur Aufbewahrung und zum Transport von optischen Bauelementen und zu deren Schutz vor Umwelteinflüssen dient, ist mit einem Schleusensystem zur Überführung der optischen Bauelemente in einen optischen Strahlengang ausgestattet. Eine Behältertür 2 zum gasdichten Verschließen des Behälters 1 ist Bestandteil des Schleusensystems und besteht aus zwei gegeneinander verschiebbaren Teilen 3 und 4, wobei Anschläge 5 und 6 an dem Teil 4, dem eigentlichen schließenden Element, eine erste relative Verschiebbarkeit des ersten Teils 3 gegenüber dem zweiten Teil 4 begrenzt. Während beide Teile 3 und 4 zunächst gemeinsam durch eine lineare Führung des Teils 4 in einer Gleitführung des Behälters 1 bis zu einer ersten vorgegebenen Hublänge verstellbar sind, besitzt das Teil 4 darüber hinaus noch einen erweiterten Hub. Sowohl der Behälter 1 als auch die Behältertür 2 sind aus Materialien gefertigt oder mit Beschichtungen versehen, bei denen ein Ausgasen von störenden Elementen vermieden ist. Geeignet sind z. B. Edelstahl, bei dem der Schwefelanteil sehr gering ist oder Nickel-Phosphorbeschichtbare Materialien.

Vorteilhaft ist der schließende Teil 4 keilförmig ausgebildet, so dass die Behältertür 2 platzsparend über einen Schiebemechanismus staubdicht und nach Verschrauben auch vakuumdicht verschlossen werden kann. Erforderliche Dichtungen sind unverlierbar und umlaufend in eine Trapeznut 7 eingebracht und wirken im geschlossenen Zustand des Behälters 1 gegen die schräge Fläche 8 des Teils 4.

Mitnehmer 9, 10 an dem Teil 3 sind dazu vorgesehen, einen Verschluss 11 einer Be- und Entladeöffnung 12 an einer nicht dargestellten Reinstraumkammer, in der sich der zu bestückende optische Strahlengang befindet, zu öffnen und zu schließen.

Geschützt durch eine abnehmbare Abdeckkappe 13, die zu Spülzwecken auch mit Anschlüssen für Schutzgas versehen sein kann, enthält der Behälter 1 einen Manipulator 14, der an einem Träger 15 für mindestens ein darauf justiert befestigtes optisches Bauelement 16 in definierten Positionen des Trägers 15 lösbar angreift. Solche optischen Bauelemente 16 können z. B. spezialgereinigte Zylinderlinsen, sphärische Linsen, optische Ein- und Austrittsfenster oder Planoptiken, wie Spiegel sein.

Eine mit federndem Druckstück 17 ausgebildete Transportsicherung fixiert den Manipulator 14 beim Transport sowie bei der Lagerung des Behälters 1 und verhindert auch ein Aufsetzen der Abdeckkappe 13 durch seinen Überstand über den Aufsetzbereich, solange der Manipulator 14 nicht wieder arretiert ist.

Der Manipulator 14 weist eine Schnittstelle zur Befestigung eines verlängernden Manipulatorarms 18 in Form einer Schraubverbindung 19 auf (Fig. 4). Zur Handhabung des Trägers 15 mit jedem darauf befestigten optischen Bauelement 16 ist es erforderlich, die Lagesicherung 17 entsprechend der Darstellung in Fig. 5 durch axiale Verschiebung zu lösen, um so die Verstellbarkeit des Manipulators 14, die senkrecht zur Verstellung der Behältertür 2 gerichtet ist, herzustellen.

Damit diese Verstellbarkeit nutzbringend wirksam werden kann, ist im Bereich der Be- und Entladeöffnung 12 eine als Interface dienende Aufnahmeplatte 20 für den Behälter 1 angebracht, die gemäß Fig. 3 Stifte 21, 22 und 23 zum lageorientierten Aufsetzen des Behälters 1 sowie Gewindebohrungen 24, 25 enthält, in die durch den Behälter 1 unverlierbar hindurchgeführte Spindeln 26, 27 zu dessen Befestigung eingeschraubt werden können. Der Stift 23 besitzt noch eine weitere Funktion, indem dieser als Betätigungselement zur Freigabe eines Arretierungsschiebers 28 dient, mit dem eine Sicherung des schließenden Teils 4 der Behältertür 2 erfolgt, wenn der Behälter 1 nicht auf die Aufnahmeplatte 20 aufgesetzt oder wenn die Behältertür 2 außerhalb des Systems geöffnet werden soll.

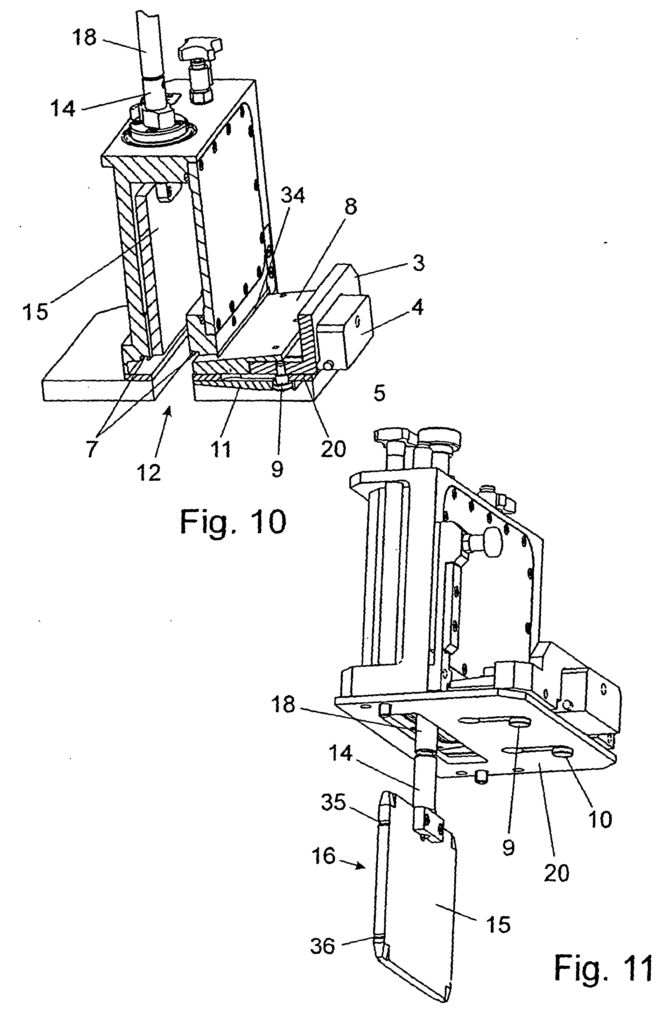

Die Mitnehmer 9 und 10 sind durch Längsnuten 29, 30 hindurchführbar, um zum Öffnen des Verschlusses 11 in diesen eingreifen zu können. Ist der Behälter 1 auf die Aufnahmeplatte 20 aufgesetzt und der Verschluss 11 geöffnet (Fig. 10), so ist der Transportweg für den zu manipulierenden Träger 15 und jedes darauf befindliche optische Bauelement 16 über ein Durchtrittsfenster 31 in der Aufnahmeplatte 20 und die Be- und Entladeöffnung 12 bis zu dem optischen Strahlengang in der Reinstraumkammer freigegeben.

Des Weiteren besitzt der Behälter 2 Anschlüsse 32, 33, über die unerwünschte Substanzen durch eine Spülung mit Schutzgas (Stickstoff) oder durch Evakuierung entfernt werden können. Vorteilhaft führt man diese Maßnahmen abwechselnd durch.

Zur Überführung des in dem Behälter 1 befindlichen Trägers 15 mit jedem darauf justiert befestigten optischen Bauelement 16 in den optischen Strahlengang wird der Behälter 1 auf die Aufnahmeplatte 20 aufgesetzt und mit den Spindeln 26, 27 verschraubt. Bei diesem Vorgang greifen die Mitnehmer 9, 10 an dem Teil 3 durch die Längsnuten 29, 30 in der Aufnahmeplatte 20 hindurch in den als Schleusenschieber ausgebildeten Verschluss 11 der Be- und Entladeöffnung 12 (Fig. 10) ein.

Durch Aufziehen des ersten Teils 3 der Behältertür 2 um etwa 10 mm bis zu dessen Anlage an den Anschlägen 5, 6 des zweiten Teils 4 wird der Verschluss 11 mitgenommen und öffnet die Be- und Entladeöffnung 12 in der Reinstraumkammer so weit, dass ein ausströmender Schutzgasstrom die lose aneinander anliegenden Teile 3, 4 der Behältertür 2, der Aufnahmeplatte 20 und des Verschlusses 11 reinigen kann.

Nach dem Spülvorgang, bei dem der Behälter 1 durch den zweiten Teil 4 der Behältertür 2 noch verschlossen ist, kann der mit Hilfe des Stiftes 23 freigegebene Arretierungsschieber 28 betätigt werden, wodurch sich nun auch der zweite Teil 4 beim weiteren Aufziehen des ersten Teils 3 mitnehmen lässt und der Behälter 1 geöffnet wird.

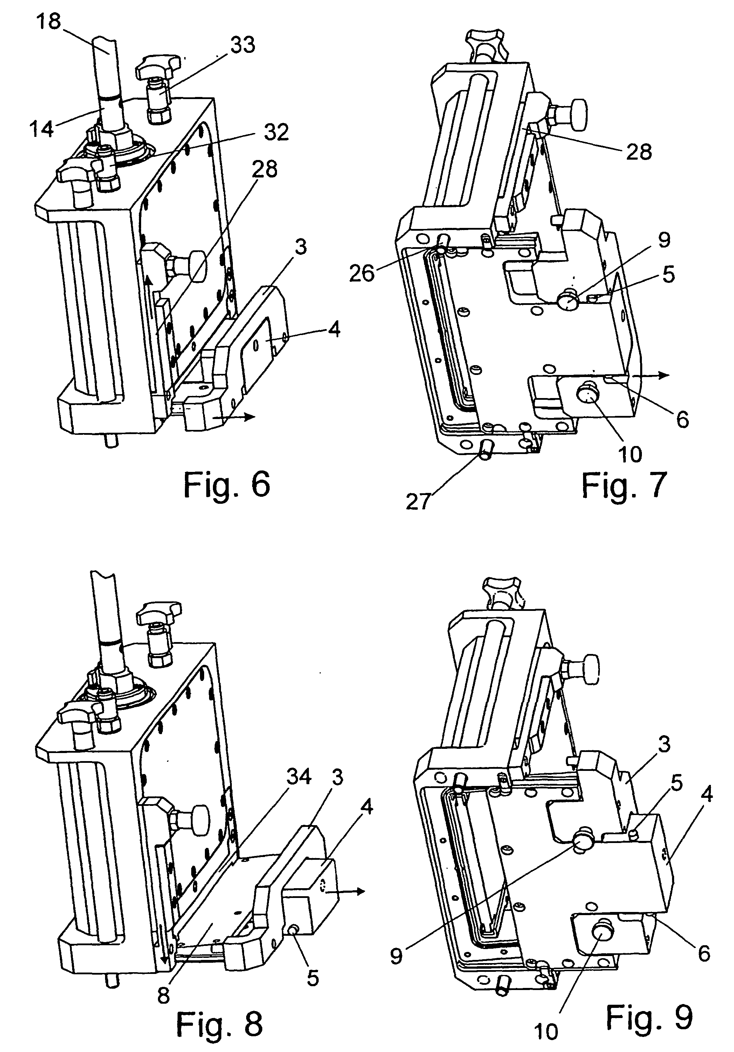

In vorteilhafter Weise ist bei der vorliegenden Ausführung ein Hubausgleich für unterschiedliche Hübe des Verschlusses 11 und der Behältertür 2 vorgesehen, indem der zweite Teil 4 der Behältertür 2 über einen erweiterten Hub gegenüber dem ersten Teil verfügt. Somit kann der zweite Teil 4 weiter aufgezogen werden, nachdem der erste Teil 3 seine Endlage durch den Anschlag der Mitnehmer 9, 10 in den Längsnuten 29, 30 der Aufnahmeplatte 20 erreicht hat (Fig. 8 und 9).

Zur Vermeidung von Druckverlusten innerhalb der Reinstraumkammer ist der Behälter 1 in vorteilhafter Weise im Türbereich mit einer Spaltbegrenzung in Form einer Blende 34 versehen, die zu der schrägen Fläche 8 des keilförmig ausgebildeten schließenden Teils 4 immer einen im Wesentlichen konstanten Spalt von etwa 1/10 bis 2/10 mm freilässt. Bei der Blende 34 handelt sich um ein federndes Gleitstück, dessen Außenbereiche als Linienführungen auf der schrägen Fläche 8 aufliegen und das über eine zwischen den Linienführungen vorgesehene Aussparung den im Wesentlichen konstant bleibenden Spalt freilässt. Ein Zerkratzen der Schrägenoberfläche wird vermieden, indem die Linienführung auf einer Gleitfläche außerhalb des Dichtungsbereiches erfolgt.

Sind der Behälter 1 und die Be- und Entladeöffnung 12 vollständig geöffnet, kann der Träger 15 mit jedem darauf justiert befestigten optischen Bauelement 16 mit Hilfe des Manipulators 14 in den optischen Strahlengang überführt und dort zum Verbleib in einer Arbeitsstellung positioniert und fixiert werden, nachdem die Abdeckkappe 13 abgenommen, der verlängernde Manipulatorarm 18 angeschraubt und die Transportsicherung 17 aufgehoben ist.

Die sofortige Arbeitsfähigkeit der in den optischen Strahlengang überführten Objekte wird durch die Vorjustierung jedes optischen Bauelements 16 auf dem Träger 15 erreicht. Dadurch reicht es aus, dass das überführte Objekt lediglich gegen Referenzpunkte angelegt werden muss, um diesen gewünschten Zustand herzustellen. Je nach Art des optischen Bauelementes können diese Referenzpunkte unterschiedlich gestaltet sein.

Um ein Durchfallen des Manipulators 14 und somit einen Verlust des optischen Bauelementes 16 zu verhindern, sind in den Träger 15 Nuten 35, 36 eingearbeitet, in die zur Einstellung verschiedener, in unterschiedlichen Ebenen liegender Raststellungen innerhalb des Behälters 1 und innerhalb der Reinstraumkammer befindliche Federdruckstifte einrasten. Nur in diesen Raststellungen kann der Manipulator 14 von dem Träger 15 getrennt werden, indem eine Schraubverbindung nur bei bestehender Feststellung des Trägers 15 durch die Rast zu lösen ist.

Der Manipulator 14, der in dieser Ausführung vorteilhaft in dem Behälter 1 integriert ist, kann in einer anderen Ausführung als externe Handhabungseinrichtung auch außerhalb des Behälters 1 angeordnet vorgesehen sein.

Nachdem der Manipulator 14 von dem Träger 15 getrennt und wieder in den Behälter 1 zurückgeführt worden ist, erfolgt das Schließen des Behälters 1 und seine Trennung von der Aufnahmeplatte 20 in umgekehrter Reihenfolge zum Aufsetz- und Öffnungsvorgang.

## Patentansprüche

1. Einrichtung zur Aufbewahrung und zum Transport von mindestens einem optischen Bauelement, enthaltend einen Behälter mit einer gasdicht schließenden Behältertür, einen in dem Behälter vorgesehenen Träger (15) zur Aufnahme von mindestens einem der optischen Bauelemente und einen Manipulator (14), der an dem Träger (15) zum Hindurchführen des Trägers (15) durch eine bei geöffneter Behältertür (2) bestehende Schleusenöffnung abgreift, **dadurch gekennzeichnet, dass** die Behältertür (2) aus zwei senkrecht zur Richtung der Manipulation des Trägers (15) gegeneinander verschiebbaren Teilen (3, 4) besteht, die voneinander verschiedene Öffnungshübe aufweisen.

2. Einrichtung nach Anspruch 1, **dadurch gekennzeichnet, dass** ein erster Teil (3) Mitnehmer (9, 10) zum Öffnen und Schließen eines Schleusenschiebers aufweist und ein zweiter, zum Verschließen des Behälters (1) dienender Teil (4) durch einen Arretierungsschiebers (28) in seiner Schließfunktion gesichert ist.

3. Einrichtung nach Anspruch 2, **dadurch gekennzeichnet, dass** die beiden Teile (3, 4) in einer Richtung senkrecht zur Manipulation des Trägers (15) in unterschiedliche Stellungen verschiebbar sind,
mit einer ersten Stellung für das erste Teil (3) und den mitgenommenen Schleusenschieber zur Teilereinigung mittels Schutzgas, bei der der zweite Teil (4) den Behälter (1) verschließt und durch einen Arretierungsschiebers (28) in seiner Schließfunktion gesichert ist und mit mindestens einer weiteren Stellung, bei der die Schleusenöffnung freigegeben ist.

4. Einrichtung nach Anspruch 3, **dadurch gekennzeichnet, dass** eine zweite Stellung mit gemeinsamer Verschiebeposition der beiden Teile (3, 4) und teilweise geöffnetem Behälter (1) und eine dritte Stellung mit einem größeren Öffnungshub des zweiten Teils (4) gegenüber dem ersten Teil (3) und vollständig geöffnetem Behälter (1) vorgesehen sind.

5. Einrichtung nach Anspruch 4, **dadurch gekennzeichnet, dass** der Behälter (1) mit einer gegenüber dem schließenden Teil (4) spältbegrenzenden Blende (34) versehen ist.

6. Einrichtung nach einem der Ansprüche 1 bis 5, **dadurch gekennzeichnet, dass** der Manipulator (14) eine Schnittstelle zur Befestigung eines verlängernden Manipulatorarms (18) aufweist.

7. Einrichtung nach Anspruch 6, **dadurch gekennzeichnet, dass** innerhalb des Behälters (1) in unterschiedlichen Ebenen liegende Raststellungen vorgesehen sind, in denen der Träger (15) durch Federdruckstifte, die in Nuten (35, 36) in dem Träger (15) einrasten, fixierbar ist.

8. Einrichtung nach Anspruch 7, **dadurch gekennzeichnet, dass** der Manipulators (14) über eine Schraubverbindung mit dem Träger (15) verbunden ist, die nur bei bestehender Fixierung in den Raststellungen zu lösen ist.

## Claims

1. Device for storage and transport of at least one optical component, said device including a container with a gas-tightly closable container door, a support (15) provided within said container to receive at least one of said optical components, and a manipulator (14) which acts on the support (15) for passing the support (15) through a sluice opening, which is present when the container door (2) is open, **characterized in that** the container door (2) consists of two parts (3, 4) which are displaceable relative to each other, perpendicular to the direction of manipulation of the support (15), said parts having opening strokes which differ from each other.

2. Device according to claim 1, **characterized in that** a first part (3) comprises drive members (9, 10) for opening and closing a sluice slider, and **in that** a second part (4), which serves to close the container (1), is secured in its closing function by a locking slider (28).

3. Device according to claim 2, **characterized in that** both parts (3, 4) are displaceable in a direction perpendicular to the manipulation of the support (15) into different positions,
including a first position for the first part (3) and the driven sluice slider, for the cleaning of parts by means of protective gas, in which position the second part (4) closes the container (1) and is secured in its closing function by a locking slider (28), and including at least one further position in which the sluice opening is open.

4. Device according to claim 3, **characterized in that** there are provided a second position with a common displacement position of the two parts (3, 4) and with the container (1) partially opened, and a third position with a larger opening stroke of the second part (4) relative to the first part (3) and with the container (1) opened completely.

5. Device according to claim 4, **characterized in that** the container (1) is provided with a screen (34) which limits the gap relative to the closing part (4).

6. Device according to any one of claims 1 to 5, **characterized in that** the manipulator (14) comprises an interface for mounting an elongating manipulator arm (18).

7. Device according to claim 6, **characterized in that** locking positions located in different planes are provided within the container (1), in which planes the support (15) is fixable by spring-pressure pins which engage in grooves (35, 36) in the support (15).

8. Device according to claim 7, **characterized in that** the manipulator (14) is connected to the support (15) via a screw connection which can be released only if a fixation is present in the locking positions.

## Revendications

1. Dispositif de stockage et de transport d'au moins un élément optique, leditif dispositif contenant un récipient avec une porte de récipient qui peut être fermée de manière étanche au gaz, un support (15) prévu dans ledit récipient afin de recevoir au moins un des éléments optiques, et un manipulateur (14) qui agit sur ledit support (15) afin de passer le support (15) à travers une ouverture d'écluse, qui est présente lorsque la porte (2) du récipient est ouverte, caracterié en ce que la porte (2) du récipient est constituée de deux parties (3, 4) qui peuvent être déplacées l'une par rapport à l'autre, perpendiculairement à la direction de manipulation du support (15), lesdites parties présentant des levées d'ouverture différentes entre eux.

2. Dispositif selon la revendication 1, **caractérisé en ce qu'**une première partie (3) comporte des entraîneurs (9, 10) destinés à ouvrir et fermer une coulisse d'écluse, et **en ce qu'**une deuxième partie (4), destinée à fermer ledit récipient (1), est arrêtée dans sa fonction de fermeture par un coulisseau d'arrêt (28).

3. Dispositif selon la revendication 2, **caractérisé en ce que** les deux parties (3, 4) peuvent être déplacées vers des positions différentes, dans une direction perpendiculaire à la manipulation du support (15),
comportant une première position pour la première partie (3) et pour le coulisseau d'écluse entraîné, pour le nettoyage de pièces au moyen d'un gaz protecteur, position dans laquelle la deuxième partie (4) ferme le récipient (1) et est arrêtée dans sa fonction de fermeture par un coulisseau d'arrêt (28), et comportant au moins une autre position, dans laquelle l'ouverture d'écluse est ouverte.

4. Dispositif selon la revendication 3, **caractérisé en ce qu'**on prévoit une deuxième position avec une position commune de déplacement des deux parties (3, 4), dans laquelle le récipient (1) est partiellement ouvert, et une troisième position avec une levée d'ouverture plus grande de la deuxième partie (4) par rapport à la première partie (3) et avec une ouverture complète du récipient (1).

5. Dispositif selon la revendication 4, **caractérisé en ce que** le récipient (1) est pourvu d'un écran (34) qui limite la fente par rapport à la partie (4) de fermeture.

6. Dispositif selon l'une quelconque des revendications 1 to 5, **caractérisé en ce** le manipulateur (14) comporte une interface pour le montage d'un bras de manipulateur (18) d'élongation.

7. Dispositif selon la revendication 6, **caractérisé en ce que** des positions de verrouillage qui se trouvent dans différentes plaines sont pourvues dans le récipient (1), le support (15) pouvant être fixé dans lesdites positions par des goupilles de ressort qui s'engrènent dans des rainures (35, 36) dans le support (15).

8. Dispositif selon la revendication 7, **caractérisé en ce que** le manipulateur (14) est relié au support (15) par une connexion à vis qui ne peut être desserrée que lors d'une fixation dans les positions de verrouillage.
